# EUROPEAN PATENT SPECIFICATION

(11) **EP 2 281 468 B1**
(45) Date of publication and mention of the grant of the patent: **21.03.2012**
(21) Application number: 09167065.3
(22) Date of filing: 03.08.2009
(51) Int. Cl.: A23N 7/00, A23N 15/00, A23P 1/10, B23K 26/00, B23K 26/40

(54) **Method of processing food material using a pulsed laser beam**
Verfahren zur Verarbeitung von Nahrungsmittelmaterial mit einem Impulslaserstrahl
Procédé de traitement de matériel alimentaire à l'aide d'un faisceau laser pulsé

(43) Date of publication of application: 09.02.2011
(73) Proprietor: Kraft Foods R & D, Inc., Northfield, IL 60093-2753 (US)
(72) Inventor: Loeser, Ulrich, Dr., 82054, Sauerlach (DE)
(74) Representative: HOFFMANN EITLE

(56) References cited:
- EP-A2- 1 747 838
- WO-A1-02/19881
- DE-A1- 3 836 821
- DE-A1- 10 158 115
- US-A- 3 955 921
- US-A- 4 486 645
- US-A- 5 897 797

## Description

### Field of the Invention

The invention relates to a method of processing food material using a pulsed laser beam with a focussed laser spot.

### Background Art

It is know in the art to use continuous wave (CW) or pulsed laser beams with pulse durations in the ns range to cut or slice food material, such as cheese, meat or bakery products. Commonly, CO₂ lasers with wavelengths in the long-wavelength infrared (IR) range (8 to 15 µm) are used for this method. A cut or hole in the food material is usually created due to the melting and evaporation or sublimation of the material in the vicinity of the laser beam. One of the major problems associated with this approach is that a significant amount of heat is generated during the cutting process, leading for example to unclean cutting edges and thermal damage, such as burning, of the food material. This effect is particularly problematic when the laser cutting method is to be applied to thermally sensitive food material, e.g., with a low melting temperature, such as chocolate or confectionery.

Recently, a method of slicing cheese using a pulsed laser beam with wavelengths (266 and 355 nm) in the ultraviolet (UV) wavelength range has been investigated (see "H. Choi and X. Li, Journal of Food Engineering 75, pages 90-95, 2006"). A pulse duration of 10 ns and a repetition rate of 20 Hz were used. In this approach, the food material is cut by photo-ablation, i.e., the uppermost layer of food material is consecutively vaporised (ablated) by the influence of the laser beam, thus creating a kerf and finally a cut line at the position of the beam.

From DE-10158115-A1 and US-5,897,797 methods are known for marking food products by laser beams. US-4,486,645 discloses a method for slotting sansage casings by laser beams. WO-02/19881-A1 discloses a method for perforating egg shells by lasers.

### Summary of the Invention

The objective of the invention is to provide a reliable, precise and non-damaging method of processing food material. This goal is achieved by a method with the technical features of claim 1. Preferred embodiments of the invention follow from the dependent claims.

The invention provides a method of processing food material using a pulsed laser beam, wherein the wavelength of the laser beam is in the near-infrared (IR) range and the laser beam has a focussed laser spot. The method comprises the step of applying a laser pulse with a pulse duration in the range of 1 to 1000 fs to the food material, wherein the focused laser spot lies on the surface of the food material or in the body of the food material and the laser pulse creates a cavity in the food material at the position of the focussed laser spot. The term "near-infrared (IR) range" designates a wavelength range of about 750 to 1400 nm. The term "cavity" refers to a hollow space or recess that is formed in the surface or inside the body of the food material, depending on the position of the focussed laser spot. Since the area where the cavity is formed is essentially restricted to the position of the focussed laser spot, the size of the cavity created by the laser pulse is substantially determined by the size of the laser spot. In conventional optical techniques laser spot sizes of a few µms or even below 1 µm can be readily achieved, so that the cavity formation can be restricted to a very small area or volume. In addition, mainly due to the extremely short pulse duration but also due to the low photon energy of light in the near-IR range (as compared to UV light for example), only a relatively small amount of energy is deposited in the food material during the laser pulse and substantially no heat is generated outside the position of the laser spot. Thus, the cavity can be created in the food material with a high degree of precision and without causing any thermal damage to the material surrounding the cavity. The method of the invention can therefore also be applied to thermally sensitive food material, such as chocolate, confectionery or ice cream.

In one embodiment, the method of the invention comprises the step of applying a sequence of laser pulses with a pulse duration in the range of 1 to 1000 fs to the food material, wherein the focussed laser spot lies on the surface of the food material or in the body of the food material and each laser pulse creates a cavity in the food material at the position of the focussed laser spot.

Preferably, the method according to this embodiment further comprises the step of moving the position of the focussed laser spot over the surface of the food material and/or through the body of the food material while applying the sequence of laser pulses, thereby creating a sequence of cavities in the food material. Herein, the movement of the laser spot can be effected, for example, by scanning the laser beam over the stationary food material or, alternatively, by keeping the laser beam stationary and moving the food material relative to the laser spot position by use of a positioning unit. A combination of these two techniques, i.e., moving both the laser beam and the food material simultaneously, would also be feasible. The method of this embodiment may for example be used to alter the texture and/or consistency (mouth feel) of food material by creating a plurality of cavities on its surface and/or inside its body without causing any damage to the material, e.g., by burning it. Furthermore, providing the surfaces of a food material with a number of cavities may be used to change the appearance and/or the grip feel of food material.

Preferably, the sequence of cavities in the food material defines a cutting line or a cutting plane along which the food material is cut. In this case, no additional preparation of the food material prior to cutting, such as freezing, dehydration, embedding in resin or paraffin or decalcification, is required, unlike with conventional cutting or slicing techniques. Since the volume of the cavities is essentially limited by the size of the laser spot, which can be made very small, as detailed above, and since no thermal damage is caused in the material surrounding the cavities, well-defined and precise cutting lines and/or cutting planes can be achieved. Furthermore, the method of the invention may be used to drill holes or grooves with accurately defined shapes and dimensions into any given food material.

Preferably the method of the invention further comprises the step of separating the cut food material at the cutting line or cutting plane. In some embodiments, an additional external force acting on the cut food material (apart from gravity) is required for its complete separation. Due to its high level of precision, the present method allows for a controlled separation (cutting, slicing etc.) of food material with accuracies in the µm range. Moreover, problems associated with conventional cutting, slicing or milling techniques, such as the generation of a large amount of frictional heat, causing thermal damage to the food material, are avoided since with the present method no thermal damage is induced outside the area of the cavity (or cutting line/plane). In this way, even small food particles, such as sugar, sugar alternatives or salt crystals, can be precisely cut and shaped without generating a fine particle fraction (residue, debris) as in conventional techniques. Food material particle sizes, shapes and geometries can be controlled, on the µm scale, all at the same time, enabling a variety of food processing possibilities. Due to its high level of accuracy and control, the present method may advantageously be employed to produce a plurality of evenly shaped food particles, e.g., sugar, sugar alternatives or salt crystals, with identical particle shapes and/or sizes.

For example, the present method may be used to controllably cut or mill sugar particles (or sugar alternatives, such as artificial sweeteners) without inducing the formation of amorphous layers in the sugar since substantially no heat is generated outside the cutting area. Cutting or milling sugar particles in this way offers various advantages. First, the risk of generating any undesired flavours in the processed particles is extremely low. Second, sugar with well-defined particle shapes and sizes can for example, be used in high concentrated suspensions, e.g., in confectionery products, to reduce the caloric value of the material because less fat phase is required to get at least similar flow properties and sensorial perception, such as mouth feel and taste release during chewing. By exceeding a required minimum quantity to form molecular solvent layers on such cut or milled particles, the overall creaminess of a food product can be controlled while at the same time fat add-on levels are kept very low. In particular, the present method may be used to produce single particles with textured surfaces so as to manipulate the interfacial surface tension in order to reduce the amount of fat required to form particle surfaces that are completely covered with a monolayer. Moreover, the overall sweetness perception of a product can be manipulated by texture design features. In addition, if hydroscopic sugar particles are cut or milled in a precisely controlled manner, their material properties, such as their melting temperature etc., can be controllably altered. Furthermore, sugar or salt crystals could be cut or milled so as to exhibit a desired geometrical shape, such as a cube. Such precisely cut or milled crystals may then be used as seed crystals for growing larger crystals with a crystalline structure that is significantly improved in terms of defects, imperfections, contaminants etc.

On the other hand, the present method can also be advantageously applied to larger sized food materials, such as nuts, cocoa beans, fruits or vegetables. For example, the method may be used to make the surface of skinned nuts desolate, so as to inhibit the migration of nut oils from the inside of the nuts to their surfaces. In this way, the formation of fat bloom can be avoided and the nuts can be prevented from drying cut, thus extending their storage life. Furthermore, the method can be employed for peeling or cutting fruits or vegetables, such as salad. If, for example, a leaf of salad is cut using the method of the invention, the salad tissue in the vicinity of the cutting area remains undamaged after the cutting process, thereby avoiding the formation of brown edges.

Preferably, at least a portion to be processed of the food material is optically transparent at the wavelength of the laser beam.

In this case, the focussed laser spot may be positioned such that it lies in the body of the food material, i.e., inside the food material, underneath its surface. With such an approach, the food material to be processed may be purely cut inside its body without the need to cut its surface. For example, a plurality of cavities may be formed inside the food material in order to alter its texture and/or consistency (e.g., mouth feel), leaving its surface unchanged. Furthermore, an "invisible" (i.e., not visible from the outside) breaking line or plane can be created within a food material, such as a chocolate tablet, acting as a predetermined breaking area. Such lines may be used to guide the consumer, for example, to use a portion associated with a certain caloric value.

Preferably, the pulse duration is in the range of 1 to 800 fs, more preferably in the range of 1 to 400 fs. The shorter the duration of the applied laser pulse or pulses is, the smaller is the amount of energy deposited in the food material per laser pulse. Thus, a decrease in pulse duration yields a further increase in the precision with which a cavity can be formed in the food material. This is particularly beneficial for the case that food material which is extremely susceptible to thermal damage is processed.

The repetition rate of the sequence of laser pulses is preferably in the range of 1 to 1000 MHz. A repetition rate of this order allows for the fast processing of food materials, in particular when used in combination with a fast laser scanner and/or positioning unit.

Preferably, the cavity (cavities) in the food material is (are) created by photodisruption. The term "photodisruption" designates the process of creating a cavity (hollow space) in a material by inducing an optical breakdown in the area of the material where the cavity is to be formed. Specifically, the high light intensity within the focussed laser spot causes ionisation of the atoms of the material within the spot region through non-linear effects, such as multiphoton or cascade ionisation, thus creating a plasma at the spot position. If the density of the thus generated free electrons exceeds a given threshold value, an optical breakdown occurs. The locally created plasma gives the energy stored therein off to the material in the region of the laser spot, whereby said material is disrupted and a cavity is formed. The photodisruption process is a very localised process that is essentially limited to the region of the focussed laser spot. Therefore, the cavity (or cutting line/plane, drill hole) formation by photodisruption allows for a high degree of positional precision without causing any thermal damage to the material surrounding the cavity (or cutting line/plane, drill hole).

In one embodiment of the method of the invention, at least a portion to be processed of the food material has a plane and even surface. Herein, the therm "even" designates a plane surface with a low surface roughness, such as a peak to valley value (distance between the highest and the deepest surface irregularity) of no more than 4 µm and an RMS value (Root Mean Square; mean square deviation related to the surface) of no more than 2 µm (e.g., for a sugar cube with an edge length of 20±2 µm). Such a geometry of the food material allows for a precise positioning of the focussed laser spot, whether on the surface or in the body of the food material, and an accurate control of its exact size. In this way, complications, such as deterioration of the focus due to inhomogeneous light absorption, reflection, diffraction or scattering, that may arise in the case of an uneven or rough food material surface can be avoided. Moreover, a liquid, such as an immersion oil, may be applied to the surface of the food material portion to be processed, in order to fill surface valleys or troughs and thereby further smoothen the surface. Such a liquid may further have good index matching properties so as to match the refractive index of the food material to be processed, thus minimising losses due to light scattering and reflection.

Preferably, at least a portion to be processed of the food material exhibits substantially no pin holes in the material and/or has a surface that is substantially free of defects and/or imperfections. Such a configuration of the food material allows for a further improvement of the controllability and precision of the processing step.

Preferably, the food material to be processed by the method of the invention is sugar or salt or a nut or a cocoa bean or a fruit or chocolate or milk powder or salad or ice cream. In this case, numerous beneficial effects and various possible applications of the present method have already been explained above. On the other hand, the method of the invention is not restricted to these materials but may in general be advantageously applied to any kind of food material, such as cocoa husks, meat, cheese, fish or frozen foods.

### Brief Description of the Drawings

Hereinafter non-limiting examples and experimental results of the method of the invention are explained with reference to the drawings, in which:
Figure 1 shows a schematical cross sectional representation of the set-up used for applying the method according to a currently preferred embodiment;
Figure 2 shows an OCT (Optical Coherence Tomography) image of a food material sample (rock sugar) prior to cutting;
Figure 3 shows an OCT image of the food material sample of Fig. 2 after being cut using the method according to the embodiment of Fig. 1;
Figure 4 shows an OCT image of another food material sample (rock sugar) after being cut using the method according to the embodiment of Fig. 1;
Figure 5 shows an SEM (Scanning Electron Microscopy) image of another food material sample (rock sugar) after being cut using the method according to the embodiment of Fig. 1;
Figure 6 shows an SEM image with larger magnification of the food material sample of Fig. 5;
Figure 7 shows an SEM image of yet another food material sample (rock sugar) after being cut using the method according to the embodiment of Fig. 1; and
Figure 8 shows an SEM image with larger magnification of the food material sample of Fig. 7.

### Detailed Description of Currently Preferred Embodiments

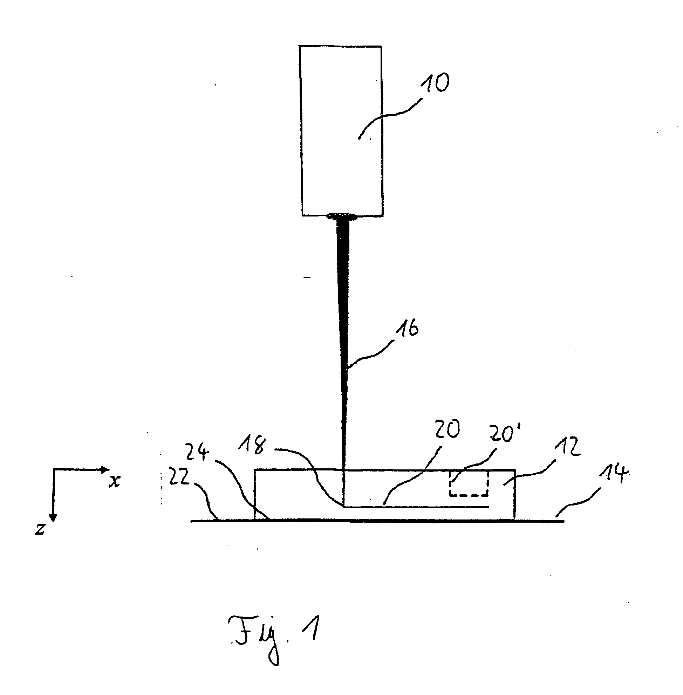

Figure 1 shows a schematical cress sectional representation of the set-up used for applying the method according to a currently preferred embodiment. The set-up includes a commercially available laser microtome 10 (Laser Microtome LMT F14 by Rowiak GmbH) and a sample holder 14. A food material sample 12, which, in this embodiment, is a piece of rock sugar, is placed on the sample holder 14 with a layer of immersion oil applied between sample 12 and holder 14 for optical adaptation. A conventional OCT (Optical Coherence Tomography) device ("Spectral Radar" by Thorlabs HL), which is not shown in Fig. 1, is used to image the rock sugar sample 12 from the side, i.e., in a direction perpendicular to the x-z plane (see Fig. 1) prior to and after performing the cutting. The parameters of the OCT device used when taking the images were a wavelength of about 930 nm, an image rate of 1 Hz, an axial and lateral resolution (i.e., in z-and x-direction, see Fig. 1) of 4 to 6 µm and an image size of 1024x512 pixels. Furthermore, a conventional scanning electron microscope (not shown in Fig. 1) is employed to image the rock sugar sample surface parallel to the plane of the sample holder 14. The laser microtome 10 produces a pulsed laser beam 16 with a wavelength of about 1030 nm and a focussed laser spot 18. The rock sugar sample 12 is optically transparent at this wavelength of the laser. Prior to cutting, the rock sugar sample 12 may be aground, e.g., by using a fine abrasive paper, so as to create a plane and even sample surface, allowing for a precise positioning of the focussed laser spot and an accurate control of its size during the cutting step.

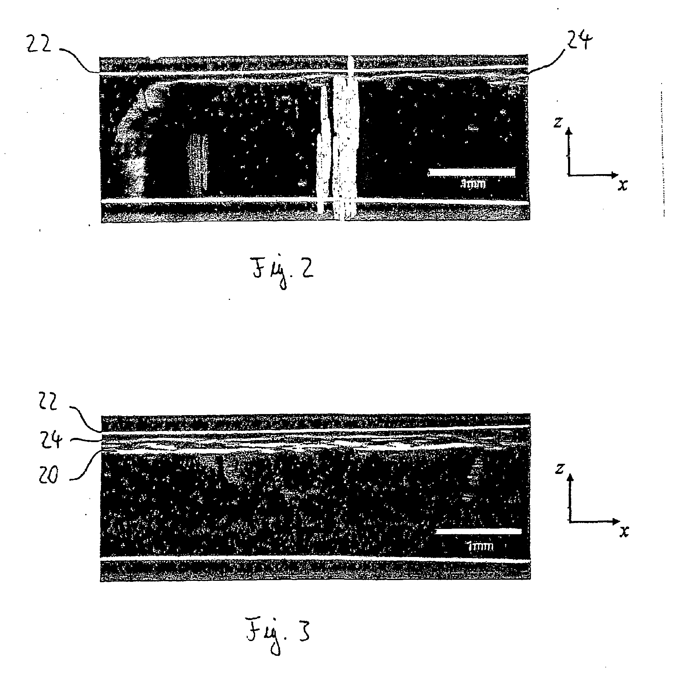

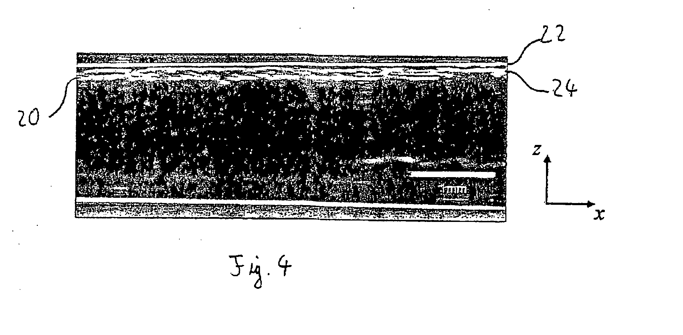

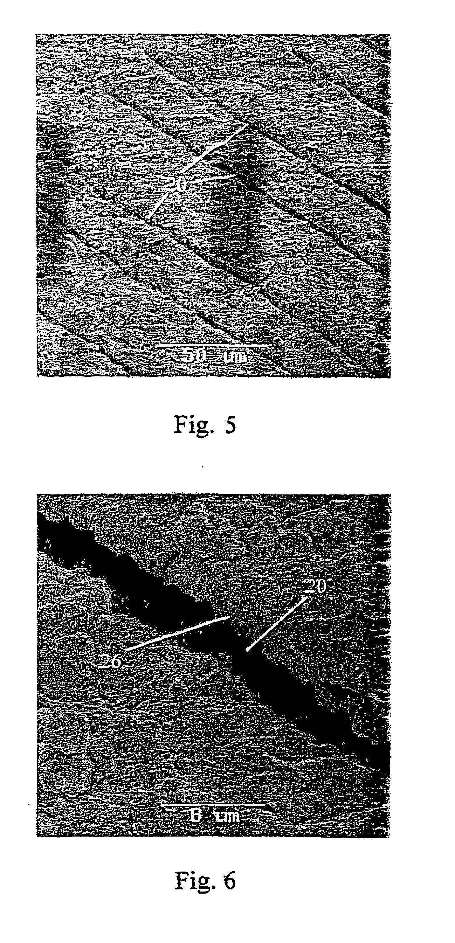

The rock sugar samples shown in Figs. 3 and 4 are continuously cut along the x-direction with the focussed laser spot 18 positioned in the body of the sample 12 (see Fig. 1). During the cutting process, the laser spot 18 is moved across the sample 12 by use of a laser scanner that is part of the laser microtome 10 and not explicitly shown in Fig. 1, resulting in a "planar" cutting line 20 that lies entirely in a sample plane parallel to the plane of the sample holder 14 (Fig. 1). In principle, the method of the present invention can be used to create all kinds of different cutting line or plane geometries with a high degree of precision. An example of such a different geometry, namely a "tunnel" cutting line or plane (20', see Fig. 1), will be explained below with reference to Figs. 5 to 8. The cavity formation and hence also the formation of the cutting lines (planes) 20, 20' in the rock sugar samples 12 is based on the physical process of photodisruption which is explained in detail above. For cutting the rock sugar samples 12 shown in Figs. 3 and 4, the laser pulse duration was about 350 fs and the repetition rate was 10 MHz. The beam power during cutting was about 1 W and the cutting speed was about 1.5 mm/s. The thickness of the cut line 20 in the z-direction was chosen to be 75 µm (Fig. 3) and 50 µm (Fig. 4), respectively. During the cutting process, a yellow glow was observed in the sample 12, which is attributed to the generation of a plasma, owing to the fact that the food material 12 is cut due to photodisruption.

The OCT images shown in Figs. 2 to 4 are turned upside down as compared to the representation of the set-up geometry shown in Fig. 1, so that the bottom side of Figs. 2 to 4 is the side where the pulsed laser beam 16 enters the sample 12.

An OCT image of the rock sugar sample 12 prior to cutting is shown in Fig. 2. The surface 22 of the sample holder 14 and the surface 24 of the rock sugar sample 12 can be clearly identified.

Figure 3 shows an OCT image of the rock sugar sample 12 of Fig. 2 after the cutting was performed with the set-up geometry depicted in Fig. 1, using the method and parameters detailed above. A cutting line 20 (thickness 75 µm) is formed within the body of the rock sugar sample 12 just underneath its surface 24, as evidenced by a bright line 20 in the OCT image that is substantially parallel to the surface 22 of the sample holder 14. A comparison of Fig. 3 with Fig. 2 shows that the sugar material underneath the cutting line 20, i.e., the material through which the pulsed laser beam 16 had to pass for cutting the line 20, is substantially unchanged, that is, no damage was done to this material during the cutting process.

Figure 4 shows an OCT image of another rock sugar sample after the cutting was performed using the same geometry, method and parameters as these of Fig. 3, apart from the thickness of the cutting line (here 50 µm). As in the case of Fig. 3, a cutting line 20 that is formed within the body of the rock sugar sample just underneath its surface 24 can be clearly identified (bright line 20 in Fig. 4).

Figures 5 to 8 show SEM (Scanning Electron Microscopy) images of two further rock sugar samples after being cut using the method according to the embodiment of Fig. 1 with a laser pulse duration of about 400 fs and a pulse repetition rate of 10 MHz. The set-up geometry used was substantially that of Fig. 1 with the only difference that the laser beam 16 was shone onto the sample from underneath, through the sample holder 14. As a sample holder 14, a glass slide was employed that is transparent to laser light at the wavelength used for the cutting process (1030 nm).

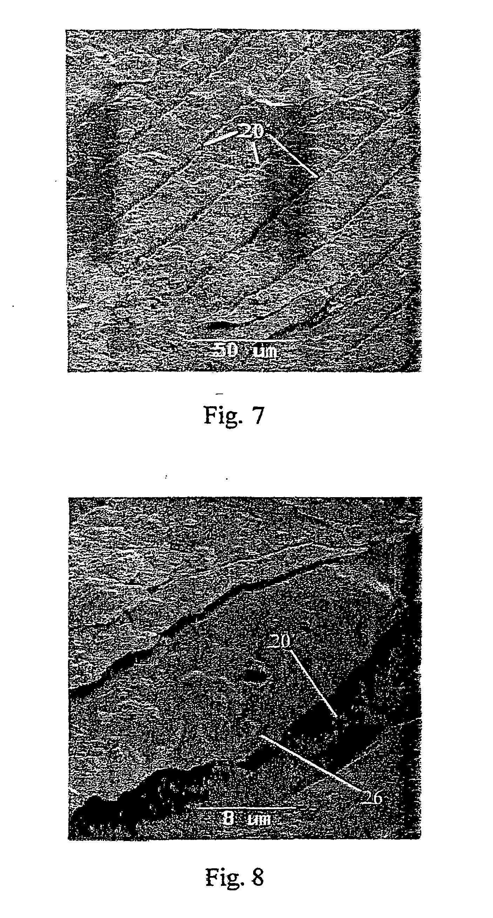

As has been indicated above, the sample shown in Figs. 5 and 6 and the sample shown in Figs. 7 and 8 were cut differently from the samples of Figs. 3 and 4, namely with a "tunnel" cutting line or plane 20'. As is schematically shown in Fig. 1, such a tunnel cutting plane 20' comprises a horizontal portion substantially parallel to the plane of the sample holder 14 and two vertical portions substantially perpendicular to the horizontal portion and connected thereto. By applying such a cut geometry, well-defined structures can be cut out and lifted off from the sample. In this way, a plurality of evenly shaped food particles with identical particle sizes and/or shapes, such as cubes or bars, can be quickly and efficiently produced. Figures 5 to 8 show arrays of the vertical portions of such cutting planes 20', wherein these portions have a depth (along the z-direction, see Fig. 1) of 30 µm extending from the sample surface into the body of the sample and are arranged in parallel to one another.

Figures 6 and 8, which have a larger magnification than Figs. 5 and 7, show the presence of protruding or "overhanging" sample portions 26 adjacent to the vertical cut portions, demonstrating that, in these areas, material was removed from underneath the sample surface during the cutting process without damaging the overlying sample layers and thus indicating the presence of a horizontal tunnel cut portion.

As is evident from Figs. 2 to 8, the method of the present invention can be used for cutting a transparent food material sample 12 inside its body with a high degree of precision and without damaging the material surrounding the cutting line (plane) 20, 20' or the surface 24 of the sample 12. Figures 5 to 8 further demonstrate that the present method is capable of creating, in a sample, arrays of cutting lines and/or planes 20' having a well-defined geometry with a high degree of precision. The method may thus, for example, be advantageously employed to produce, in an efficient and quick manner, a plurality of evenly shaped food particles with identical particle sizes and/or shapes.

## Claims

1. A method of processing food material (12) using a pulsed laser beam (16), wherein
the wavelength of the laser beam is in the near-infrared range and
the laser beam has a focussed laser spot (18), the method comprising the step of:
applying a laser pulse with a pulse duration in the range of 1 to 1000 fs to the food material, wherein the focussed laser spot lies on the surface of the food material or in the body of the food material and the laser pulse creates a cavity in the food material at the position of the focussed laser spot.

2. The method according to claim 1, comprising the step of applying a sequence of laser pulses with a pulse duration in the range of 1 to 1000 fs to the food material, wherein each laser pulse creates a cavity in the food material at the position of the focussed laser spot.

3. The method according to claim 2, further comprising the step of moving the position of the focussed laser spot over the surface of the food material and/or through the body of the food material while applying the sequence of laser pulses, thereby creating a sequence of cavities in the food material.

4. The method according to claim 3, wherein the sequence of cavities in the food material defines a cutting line (20) or a cutting plane (20') along which the food material is cut.

5. The method according to claim 4, further comprising the step of separating the cut food material at the cutting line or cutting plane.

6. The method according to any one of the preceding claims, wherein at least a portion to be processed of the food material is optically transparent at the wavelength of the laser beam.

7. The method according to claim 6, wherein the focussed laser spot lies in the body of the food material.

8. The method according to claim 7, wherein a breaking line or a breaking plane is created in the body of the food material.

9. The method according to any one of the preceding claims, wherein the pulse duration is in the range of 1 to 800 fs.

10. The method according to claim 9, wherein the pulse duration is in the range of 1 to 400 fs.

11. The method according to claim 2 or any one of claims 3 to 10 as dependent on claim 2, wherein the repetition rate of the sequence of laser pulses is in the range of 1 to 1000 MHz.

12. The method according to any one of the preceding claims, wherein the cavity in the food material is created by photodisruption.

13. The method according to any one of the preceding claims, wherein at least a portion to be processed of the food material has a plane and even surface.

14. The method according to any one of the preceding claims, wherein the food material is sugar or salt or a nut or a
cocoa bean or a fruit or chocolate or milk powder or salad or ice cream.

15. The method according to any one of the preceding claims, wherein a plurality of evenly shaped food particles with identical particle shapes and/or sizes are produced.

## Patentansprüche

1. Verfahren zum Bearbeiten von Lebensmitteln (12) unter Verwendung eines gepulsten Laserstrahls (16), wobei
die Wellenlänge des Laserstrahls in dem nah-infraroten Bereich liegt und
der Laserstrahl einen fokussierten Laserleuchtfleck (18) aufweist, wobei das Verfahren die folgenden Schritte aufweist:
Aufbringen eines Laserpulses mit einer Pulsdauer in dem Bereich von 1 bis 1000 fs auf das Lebensmittel, wobei der fokussierte Laserleuchtfleck auf der Oberfläche des Lebensmittels oder in dem Körper des Lebensmittels liegt und der Laserpuls einen Hohlraum in dem Lebensmittel an der Stelle des fokussierten Laserleuchtflecks erzeugt.

2. Verfahren nach Anspruch 1, mit dem Schritt von Aufbringen einer Sequenz von Laserpulsen mit einer Pulslänge in dem Bereich von 1 bis 1000 fs auf das Lebensmittel, wobei jeder Laserpuls einen Hohlraum in dem Lebensmittel an der Stelle des fokussierten Laserleuchtflecks erzeugt.

3. Verfahren nach Anspruch 2, ferner mit dem Schritt von Bewegen der Stelle des fokussierten Laserleuchtflecks über die Oberfläche des Lebensmittels und/oder durch den Körper des Lebensmittels, während die Sequenz von Laserpulsen aufgebracht wird, wodurch eine Sequenz von Hohlräumen in dem Lebensmittel erzeugt wird.

4. Verfahren nach Anspruch 3, bei dem die Sequenz von Hohlräumen in dem Lebensmittel eine Schnittlinie (20) oder eine Schnittebene (20') definiert, entlang der das Lebensmittel geschnitten wird.

5. Verfahren nach Anspruch 4, ferner mit dem Schritt von Trennen des geschnittenen Lebensmittels an der Schnittlinie oder der Schnittebene.

6. Verfahren nach einem der vorhergehenden Ansprüche, bei dem zumindest ein zu bearbeitender Abschnitt des Lebensmittels bei der Wellenlänge des Laserstrahls optisch transparent ist.

7. Verfahren nach Anspruch 6, bei dem der fokussierte Laserleuchtfleck in dem Körper des Lebensmittels liegt.

8. Verfahren nach Anspruch 7, bei dem eine Bruchlinie oder eine Bruchebene in dem Körper des Lebensmittels erzeugt wird.

9. Verfahren nach einem der vorhergehenden Ansprüche, bei dem die Pulslänge in dem Bereich von 1 bis 800 fs liegt.

10. Verfahren nach Anspruch 9, bei dem die Pulslänge in dem Bereich von 1 bis 400 fs liegt.

11. Verfahren nach Anspruch 2 oder einem der Ansprüche 3 bis 10 abhängig von Anspruch 2, bei dem die Wiederholungsrate der Sequenz von Laserpulsen in dem Bereich von 1 bis 1000 MHz liegt.

12. Verfahren nach einem der vorhergehenden Ansprüche, bei dem der Hohlraum in dem Lebensmittel durch Photodisruption erzeugt wird.

13. Verfahren nach einem der vorhergehenden Ansprüche, bei dem zumindest ein zu bearbeiteter Abschnitt des Lebensmittels eine ebene und gleichmäßige Oberfläche aufweist.

14. Verfahren nach einem der vorhergehenden Ansprüche, bei dem das Lebensmittel Pfeffer oder Salz oder eine Nuss oder eine Kakaobohne oder eine Frucht oder Schokolade oder Milchpulver oder Salat oder Eiscreme ist.

15. Verfahren nach einem der vorhergehenden Ansprüche, bei dem mehrere gleichmäßig geformte Lebensmittel-Teilchen mit identischen Teilchenformen und/oder -größen hergestellt werden.

## Revendications

1. Procédé de traitement de matière alimentaire (12) au moyen d'un faisceau laser pulsé (16), dans lequel
la longueur d'onde du faisceau laser est dans la gamme de l'infrarouge proche et
le faisceau laser forme un point laser focalisé (18), le procédé comprenant l'étape consistant à :
appliquer une impulsion laser ayant une durée d'impulsion dans la gamme de 1 à 1000 fs à la matière alimentaire, le point laser focalisé se situant à la surface de la matière alimentaire ou dans la masse de la matière alimentaire et l'impulsion laser créant une cavité dans la matière alimentaire à la position du point laser focalisé.

2. Procédé selon la revendication 1, comprenant l'étape consistant à appliquer une séquence d'impulsions laser ayant une durée d'impulsion dans la gamme de 1 à 1000 fs à la matière alimentaire, chaque impulsion laser créant dans la matière alimentaire une cavité à la position du point laser focalisé.

3. Procédé selon la revendication 2, comprenant en outre l'étape consistant à déplacer la position du point laser focalisé sur la surface de la matière alimentaire et/ou à travers la masse de la matière alimentaire tout en appliquant la séquence d'impulsions laser pour ainsi créer une séquence de cavités dans la matière alimentaire.

4. Procédé selon la revendication 3, dans lequel la séquence de cavités dans la matière alimentaire définit une ligne de coupe (20) ou un plan de coupe (20') le long duquel la matière alimentaire est découpée.

5. Procédé selon la revendication 4, comprenant en outre l'étape consistant à séparer la matière alimentaire découpée à l'emplacement de la ligne de coupe ou du plan de coupe.

6. Procédé selon l'une quelconque des revendications précédentes, dans lequel au moins une partie à traiter de la matière alimentaire est optiquement transparente à la longueur d'onde du faisceau laser.

7. Procédé selon la revendication 6, dans lequel le point laser focalisé se situe dans la masse de la matière alimentaire.

8. Procédé selon la revendication 7, dans lequel une ligne de cassure ou un plan de cassure est créé dans la masse de la matière alimentaire.

9. Procédé selon l'une quelconque des revendications précédentes, dans lequel la durée de l'impulsion est dans la gamme de 1 à 800 fs.

10. Procédé selon la revendication 9, dans lequel la durée de l'impulsion est dans la gamme de 1 à 400 fs.

11. Procédé selon la revendication 2 ou l'une quelconque des revendications 3 à 10 lorsqu'elle dépend de la revendication 2, dans lequel la fréquence de répétition de la séquence d'impulsions laser est dans la gamme de 1 à 1000 MHz.

12. Procédé selon l'une quelconque des revendications précédentes, dans lequel la cavité formée dans la matière alimentaire est créée par photodisruption.

13. Procédé selon l'une quelconque des revendications précédentes, dans lequel au moins une partie devant être traitée de la matière alimentaire présente une surface plane et régulière.

14. Procédé selon l'une quelconque des revendications précédentes, dans lequel la matière alimentaire est du sucre ou du sel ou une noix ou une fève de cacao ou un fruit ou du chocolat ou du lait en poudre ou une salade ou de la crème glacée.

15. Procédé selon l'une quelconque des revendications précédentes, dans lequel une pluralité de particules alimentaires de forme régulière ayant des formes et/ou des tailles de particules identiques sont produites.
